**Europäisches Patentamt**

**European Patent Office**

**Office européen des brevets**

(19)

(11) Veröffentlichungsnummer: **0 137 467**
**A2**

(12) # EUROPÄISCHE PATENTANMELDUNG

(21) Anmeldenummer: 84111955.5

(22) Anmeldetag: 05.10.84

(51) Int. Cl.⁴: **C 01 B 3/26**
C 01 B 3/02, C 01 C 1/04

(30) Priorität: 12.10.83 DE 3337078

(43) Veröffentlichungstag der Anmeldung:
17.04.85 Patentblatt 85/16

(84) Benannte Vertragsstaaten:
BE CH DE FR IT LI SE

(71) Anmelder: M.A.N. MASCHINENFABRIK
AUGSBURG-NÜRNBERG Aktiengesellschaft
Dachauer Strasse 667 Postfach 50 06 20
D-8000 München 50(DE)

(72) Erfinder: Melchior, Eckhard, Dr. Dipl.-Phys. Dr.Ing.
von-Ruckteschell-Weg 7
D-8060 Dachau(DE)

(54) Verfahren und Vorrichtung zum Herstellen von Synthesegas.

(57) Verfahren und Vorrichtung zum Herstellen von Synthesegas, insbesondere Wasserstoff (19) durch Umsetzung von Brennstoff an Katalysatoren (13, 15) unter Einwirkung von Wärme. Zur Reduzierung von Brennstoff-Exergieverlusten bei derartigen chemischen Prozessen werden die Katalysatoren zumindest teilweise durch direkte oder indirekte Sonnenenergieeinwirkung beheizt. Die aus dem chemischen Prozeß nach Trennung des Synthesegases anfallenden Restprodukte (21) werden zur Beheizung eines einen weiteren Katalysator (15) enthaltenden Reformerofens (24) verbrannt. Die Rauchgasabwärme (28) wird zur Herstellung von Dampf (29) genutzt. Die Anlage kann direkt mit einer Ammoniak-Syntheseanlage verbunden werden.

EP 0 137 467 A2

./...

M.A.N. MASCHINENFABRIK AUGSBURG-NÜRNBERG
Aktiengesellschaft
gü/sd

München, 11. Oktober 1983

## Verfahren und Vorrichtung zum Herstellen von Synthesegas

Die Erfindung betrifft ein Verfahren und eine Vorrichtung zum Herstellen von Synthesegas, insbesondere Wasserstoff, durch Umsetzen von Brennstoff an Katalysatoren unter Einwirkung von Wärme.

Synthesegase werden in großen Mengen als Mischprodukte für die Herstellung von Produkten wie Kohlenwasserstoffen, Alkoholen, Ammoniak erzeugt. Während des Ablaufes der chemischen Prozesse bei der Herstellung derartiger Synthesegase treten große Exergieverluste auf, die durch die Exergie fossiler Brennstoffe, vorwiegend solcher auf Petroleumbasis, gedeckt werden.

Der Erfindung liegt die Aufgabe zugrunde, ein Verfahren der eingangs genannten Art zu schaffen, mit dem die Brennstoff-Exergieverluste reduziert werden können.

Die Aufgabe ist erfindungsgemäß durch die im Anspruch 1 gekennzeichneten Merkmale gelöst..

7.2216

Durch die Einkopplung der Sonnenenergie in den Katalysator bzw. Dampfreformer wird zumindest ein Teil der hochwertigen Brennstoffe ersetzt, so daß die Durchführung des Prozesses mit einem sehr günstigen thermodynamischen Wirkungsgrad möglich ist.

Die Beheizung durch Sonnenenergie kann direkt durch Ausbildung des Katalysators bzw. des Dampfreformers als Solarabsorber oder indirekt mit Zwischenwärmeträgern erfolgen.

Vorzugsweise werden zwei Katalysatoren in Reihe verwendet, von denen der in Strömungsrichtung erst angeordnete durch Solarenergie beheizt wird und der zweite durch Verbrennung des Restproduktes aus dem Synthesegas-Herstellungsprozeß beheizt wird.

Hierdurch ist ein autarker, kontinuierlicher Betrieb des chemischen Prozesses möglich, bei dem die Restprodukte nicht für anderweitige Verwertung wegtransportiert werden muß, sondern zur weiteren Einsparung von Brennstoffenergie im eigenen Prozeß verwertet wird. Die Restwärme aus den Rauchgasen kann ferner vorteilhaft zur Herstellung von Prozeßdampf genutzt werden.

Gemäß einer weiteren Ausgestaltung der Erfindung wird das Verfahren zur Herstellung von Ammoniak über Synthesegas verwendet. Hierbei kann zur erforderlichen Luft-und Einsatzstoffen-Erwärmung ebenfalls die Restwärme aus den Rauchgasen verwendet werden.

7.2216
11.10.1983

In vielen sonnenreichen Ländern ist Ammoniak für die Düngemittel-Herstellung oft das erste Produkt einer beginnenden Industrialisierung daß am Herstellungsort bzw. in der Umgebung verbraucht wird und durch das erfindungsgemäße Verfahren am Verbrauchsort hergestellt werden kann, was teuere Infrastrukturen, wie z.B. Stromverteilungs-Netze oder Pipeline-Systeme bei Fernenergie-Systeme einspart.

Die unterhalb der Prozeßtemperatur verfügbare Rauchgaswärme aus der Verbrennung der Restprodukte kann dabei vollständig zur Herstellung von erforderlichem Prozeßdampf und zur Vorwärmung von Luft und Einsatzstoffen für den Ammoniak-Prozeß ausgenutzt werden. Diese Abwärmenutzung führt zu energieautarken Anlagen und damit zusätzlich zu einem großen Gesamtnutzungsgrad der Solarenergie.

Die Erfindung erstreckt sich auf eine Vorrichtung zur Durchführung des erfindungsgemäßen Verfahrens, die durch die Merkmale des Anspruches 5 gekennzeichnet ist.

Die Unteransprüche 6 bis 8 kennzeichnen vorteilhafte Ausführungen der erfindungsgemäßen Vorrichtung.

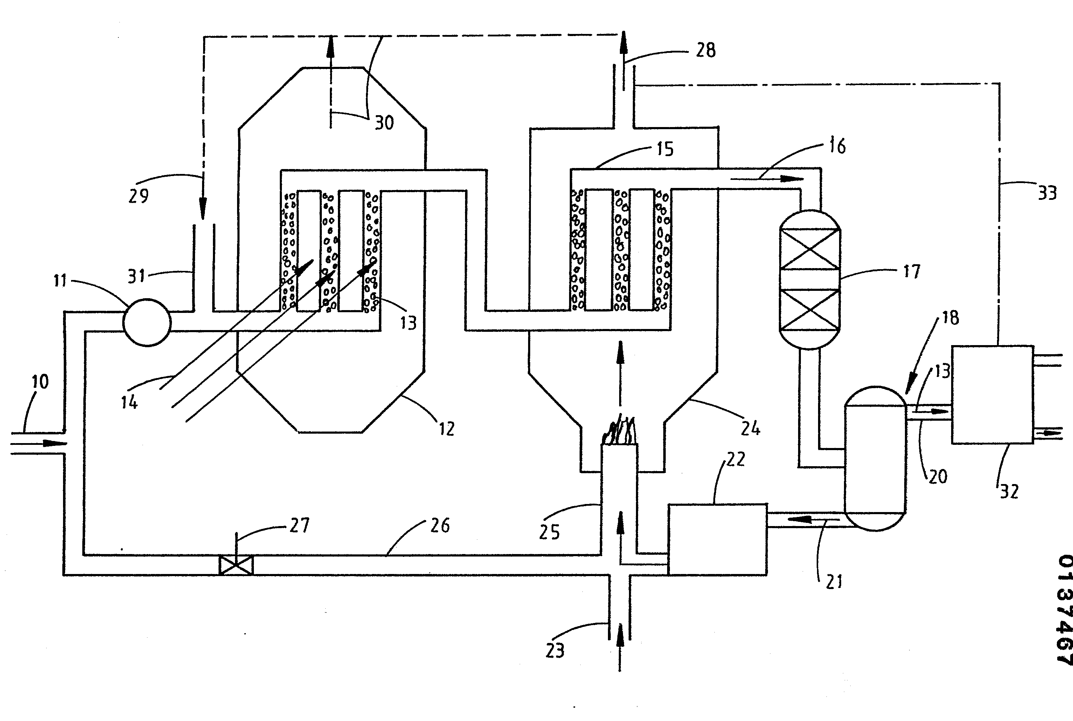

Das Verfahren wird nachstehend anhand der Zeichnung näher beschrieben.

Über eine Brennstoff-, insbesondere Erdgas-Zuleitung 10 und einer Förderpumpe 11 wird das Rohprodukt einem in einem Reformer 12 angeordneten Katalysator 13 zur Herstellung von Wasserstoff zugeführt. Der Katalysator 13 ist als Solarabsorber ausgebildet und den Solarstrahlen 14 ausgesetzt. Dem ersten Katalysator 13 ist ein Sekundär-Katalysator 15 nachgeschaltet. Das in den Katalysatoren 13 und 15 umgesetzte Erdgas 16 wird über einen CO-Converter 17

7.2216
11.10.1983

-4-

einem Druckwechseladsorptions-Wäscher 18 zugeleitet, in dem der Wasserstoff 19 getrennt und über eine Ausgangsleitung 20 abgeführt wird. Das Restprodukt bzw. Restgas 21 wird einem Speicher 22 zugeführt, aus dem das brennbare Produkt unter Zuführung von Luft 23 in einem Reformerofen 24 bei Bedarf zur Beheizung des Sekundär-Katalysators 15 verbrannt wird, wenn zur Erhaltung eines kontinuierlichen Betriebes nicht ausreichende Sonnenenergie 14 zur Verfügung steht. Die Brennstoffluftzufuhr 25 für den Reformerofen 24 ist über eine Leitung 26 und ein Ventil 27 mit der Brennstoffzufuhr 10 verbunden, so daß bei länger anhaltendem Sonnenstrahlenausfall nach Verbrauch des gespeicherten Restproduktes der Reformerofen 24 mittels Primärenergie weiter in Betrieb gehalten werden kann.

Die Endtemperatur des Primärreformers 12 wird so gewählt, daß - ähnlich einem Braun-Purifier-Prozeß oder bei nachgeschaltetem Druckwechseladsorptions-Prozeß - ein großer Teil des Methans nicht umgesetzt wird. Das ermöglicht mildere Bedingungen für den Betrieb der Katalysatorrohre 15 im Reformerofen 24 und nach Trennung des Wasserstoffes 19 von den übrigen Reaktionsprodukten 21, die Restgase 21 zur fossilen Stützung des Prozesses in Zeiten einzusetzen, während deren Solarbetieb nicht möglich ist, wie z.B. in der Nacht, bei Abschattung durch Wolken, und damit die Aufrechterhaltung eines kontinuierlichen Betriebes.

Die Sonnenenergie sowie die Wärmeenergie aus den Rauchgasen 28 vom Reformerofen 24 werden zur Erzeugung von Dampf 29 verwendet, wie es mit den gestrichelten Linien angedeutet wird. Der Dampf 29 wird für den Reformierungs-Prozeß über eine Zuleitung 31 dem Brennstoff beigemischt.

7.2216
11.10.1983

Die hier beschriebene Anlage wird bei der Verwendung des Wasserstoffes 19 zur Herstellung von Ammoniak an eine Ammoniaksyntheseanlage, die allgemein mit der Ziffer 32 gekennzeichnet ist, angeschlosssen. Hierbei wird die unterhalb der Prozeßtemperatur verfügbare Rauchgaswärme 28 außer zur Hertstellung des Dampfes 29 zur Vorwärmung (33) von Luft- und Einsatzstoffen für den Ammoniak-Prozeß ausgenützt. Die gesamte Anlage stellt somit eine energieautarke Anlage dar, bei der nicht nur Primärenergie eingespart wird, sondern auch Transport- bzw. unter Umständen lange Rohrleitungen entfallen.

Durch die Einkopplung der Solarenergie in einen derartigen Prozeß wird außerdem ein besserer exergetischer Wirkungsgrad als bei anderen Solarenergie-Nutzungssystemen, wie z.B. zur Stromerzeugung, erlangt.

Anstelle den Katalysator als Solarabsorber auszubilden, kann die Beheizung desselben durch Solarenergie auch mittelbar unter Verwendung von Zwischenwärmeträgern, z.B. ein Fluid erfolgen.

7.2216
11.10.1983

0137467

M.A.N. MASCHINENFABRIK AUGSBURG-NÜRNBERG
Aktiengesellschaft
gü/sd

München, 11. Oktober 1983

P a t e n t a n s p r ü c h e

1. Verfahren zum Herstellen von Synthesegas, insbesondere Wasserstoff, durch Umsetzung von Brennstoff an Katalysatoren unter Einwirkung von Wärme, dadurch gekennzeichnet, daß die Katalysatoren (13, 14) zumindest teilweise durch direkte oder indirekte Sonnenenergieeinwirkung beheizt werden.

2. Verfahren nach Anspruch 1, dadurch gekennzeichnet, daß zwei Katalysatoren (13, 15) in Reihe geschaltet werden, von denen der in Strömungsrichtung erst angeordnete (13) durch Solarenergie (14) beheizt wird, und daß der zweite durch Verbrennung des Restproduktes (21) aus dem Synthesegas-Herstellungsprozeß beheizt wird.

3. Verfahren nach Anspruch 1 oder 2, dadurch gekennzeichnet, daß das Verfahren zur Herstellung von Ammoniak über Synthesegas verwendet wird.

7.2216

4. Verfahren nach Anspruch 2 oder 3, dadurch gekennzeichnet, daß die unterhalb der Prozeßtemperatur verfügbare Rauchgaswärme aus der Verbrennung des Restproduktes (21) zur Erzeugung von Prozeßdampf (29) und/oder zur Vorwärmung von Luft und Einsatzstoffen (33) für den Ammoniakprozeß ausgenutzt wird.

5. Vorrichtung zum Durchführen des Verfahrens nach Anspruch 1, mit mindestens einem Katalysator, dadurch gekennzeichnet, daß mindestens ein Katalysator (13) mit Sonnenenergie (14) beheizbar ist.

6. Vorrichtung nach Anspruch 5, dadurch gekennzeichnet, daß mindestens ein Katalysator (13) als Solarenergie-Absorber ausgebildet ist.

7. Vorrichtung nach Anspruch 5 oder 6, dadurch gekennzeichnet, daß ein zweiter Katalysator (15) vorgesehen ist, der durch Verbrennung der Restprodukte (21) aus dem Synthese-Herstellungs-Prozeß beheizbar ist.

8. Vorrichtung nach Anspruch 7, dadurch gekennzeichnet, daß ein Speicher (22) für die Restprodukte (21) des Synthese-Herstellungsprozesses vorgesehen ist.

9. Vorrichtung nach Anspruch 5, dadurch gekennzeichnet, daß ein den Katalysator (13) enthaltender Reformer bzw. Reformerofen (12) als Solarkollektor ausgebildet ist.

7.2216
11.10.1983